(19) Europäisches Patentamt
European Patent Office
Office européen des brevets

(11) **EP 2 503 280 B1**

(12) **EUROPÄISCHE PATENTSCHRIFT**

(45) Veröffentlichungstag und Bekanntmachung des Hinweises auf die Patenterteilung:
**06.03.2013 Patentblatt 2013/10**

(21) Anmeldenummer: **11185720.7**

(22) Anmeldetag: **19.10.2011**

(51) Int Cl.:
*G01B 7/012* (2006.01)      *G01B 21/04* (2006.01)
*G01D 21/00* (2006.01)

(54) **Tastkopf und Verfahren zum Betreiben eines Tastkopfs**

Sensor head and method for operating same

Tête de balayage et procédé de fonctionnement d'une tête de balayage

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.03.2011 DE 102011006017**

(43) Veröffentlichungstag der Anmeldung:
**26.09.2012 Patentblatt 2012/39**

(73) Patentinhaber: **Dr. Johannes Heidenhain GmbH 83301 Traunreut (DE)**

(72) Erfinder: **Gröll, Klaus 83329 Waging am See (DE)**

(56) Entgegenhaltungen:
EP-A1- 1 557 639      EP-A2- 1 742 011
US-A1- 2008 017 726      US-A1- 2009 265 946

**Beschreibung**

Die Erfindung betrifft einen Tastkopf gemäß dem Anspruch 1 und ein Verfahren zum Betreiben eines Tastkopfs gemäß dem Anspruch 7.

Derartige Tastköpfe werden beispielsweise zur Positionsbestimmung von Werkstücken verwendet, die in materialbearbeitenden Maschinen, z. B. Fräsmaschinen, eingespannt sind. Ein Tastkopf ist üblicherweise ein Bestandteil eines Tastsystems, welches häufig eine stationäre Sender-Empfängereinheit aufweist. Diese ist normalerweise an einem ortfesten Element der materialbearbeitenden Maschine befestigt. Der Tastkopf kann an einem beweglichen Element der materialbearbeitenden Maschine, etwa an einer Frässpindel angebracht sein. Dabei umfasst der Tastkopf einen aus einer Ruheposition auslenkbaren Taststift, bzw. ein auslenkbares Tastelement, welches bei einer Auslenkung aus seiner Ruheposition heraus ein Schaltsignal erzeugt. Unter der Ruheposition des Tastelementes wird eine Position des Tastelementes verstanden, in der es keinen Kontakt mit einem Werkstück hat. Bei Kontakt des Tastelementes mit dem Werkstück wird das Tastelement aus seiner Ruheposition heraus ausgelenkt.

Bei so genannten kabellosen Tastsystemen wird das entsprechende Schaltsignal vom Tastkopf als elektromagnetisches Signal, insbesondere als Infrarot- oder Funksignal, an die stationäre Sender-Empfängereinheit übertragen. In dieser werden die Ausgangssignale des Tastsystems ausgewertet, um das Auftreten von Schaltsignalen (also eine Auslenkung des Tastelementes) festzustellen.

Ein derartiger Tastkopf weist häufig zu dessen Energieversorgung eine Spannungsquelle in Form von einer oder mehrerer Batterien auf. Es besteht der permanente Wunsch die Verfügbarkeit von derartigen Tastsystemen zu erhöhen, weshalb versucht wird die Standzeit der Spannungsquellen zu maximieren.

In der EP 1 557 639 B1 wird beispielsweise ein batteriebetriebener Tastkopf angegeben, bei dem die Lebensdauer der Batterien insbesondere durch die Verwendung eines Spannungswandlers verlängert werden soll, was letztlich die Verfügbarkeit des entsprechenden Tastkopfs wegen seltenerer Stillstandszeiten infolge verbrauchter Batterien verbessert.

Der Erfindung liegt unter anderem die Aufgabe zugrunde, einen Tastkopf bzw. ein Verfahren zum Betreiben eines Tastkopfs zu schaffen, bei welchem die Verfügbarkeit eines Tastkopfs erhöht wird.

Diese Aufgabe wird erfindungsgemäß durch die Merkmale des Anspruches 1 bzw. des Anspruches 7 gelöst.

Demgemäß weist der Tastkopf zu seiner Energieversorgung eine Spannungsquelle auf. Diese ist mit einem Spannungswandler elektrisch verbunden. Der Spannungswandler ist durch ein Mittel zur Kontrolle der Eingangsleistung des Spannungswandlers ansteuerbar, wobei am Ausgang des Spannungswandlers eine Spannung erzeugbar ist, die höher ist als die Ausgangsspannung der Spannungsquelle. Dabei ist weiterhin ein Ladungsspeicher, welcher mit Hilfe des Spannungswandlers elektrisch aufladbar ist, mit dem Ausgang des Spannungswandlers elektrisch verbunden. Der Tastkopf ist so konfiguriert, dass

● ein Ausgangsstromimpuls durch den Ladungsspeicher in definierten Zeitabständen an einen Verbraucher mit zeitlich veränderlichem Strombedarf, insbesondere mit einem pulsförmigen Strombedarf, abgebbar ist
● für ein nachfolgendes Zeitintervall eine an den Ladungsspeicher nachzuführende mittlere Leistung ermittelbar ist,
● in Abhängigkeit von dieser ermittelten mittleren Leistung die Höhe der mittleren Eingangsleistung, welche durch den Spannungswandler von der Spannungsquelle abzuziehen ist, festlegbar ist, und der Spannungswandler durch das Mittel demgemäß ansteuerbar ist.

Der Ansteuerung folgend ist dann dem Spannungswandler die mittlere Eingangsleistung zuführbar bzw. kann ein mittlerer Eingangsstrom von der Spannungsquelle durch den Spannungswandler zum Ladungsspeicher transferiert werden.

Mit Vorteil kann der Verbraucher als eine Sendestufe ausgebildet sein, so dass von der Sendestufe ein elektromagnetisches Signal erzeugbar ist.

Im Folgenden kann das Mittel zur Kontrolle der Eingangsleistung insbesondere als eine CPU ausgestaltet sein. Die Spannungsquelle kann als Gleichspannungsquelle ausgestaltet sein, insbesondere als eine oder mehrere Batterien. Im Folgenden wird im Übrigen unter Batterie sowohl eine nicht wiederaufladbare Batterie als auch ein aufladbarer Akku verstanden. Gemäß der in der Physik üblichen Terminologie ist unter dem Begriff Leistung eine auf ein Zeitintervall bezogene Energie, hier elektrische Energie, zu verstehen.

Weiterhin können beispielsweise als Ladungsspeicher ein oder mehrere Kondensatoren oder auch ein oder mehrere elektrochemische Doppelschichtkondensatoren verwendet werden.

Mit Vorteil weist der Spannungswandler einen Schalter, insbesondere in Form eines Transistors auf, der mit dem Mittel zur Kontrolle der Eingangsleistung elektrisch verbunden ist. Diese elektrische Verbindung dient insbesondere dazu den Schalter im Sinne einer Pulsweitenmodulation oder einer Pulsfrequenzmodulation anzusteuern.

Insbesondere kann der Tastkopf eine Schaltung zur Bestimmung einer am Eingang des Spannungswandlers anliegenden Spannung umfassen. Alternativ oder ergänzend kann der Tastkopf eine Schaltung zur Bestimmung einer am Ladungsspeicher anliegenden Spannung umfassen.

In einer bevorzugten Ausgestaltung der Erfindung umfasst das Mittel zur Kontrolle der Eingangsleistung, also z. B. eine CPU, eine Schaltung zur Bestimmung einer am Eingang des Spannungswandlers anliegende Spannung und / oder eine Schaltung zur Bestimmung einer am Ladungsspeicher anliegenden Spannung.

Des Weiteren umfasst die Erfindung auch ein Verfahren zum Betreiben eines Tastkopfs. Der Tastkopf weist zu seiner Energieversorgung eine Spannungsquelle auf, wobei die Spannungsquelle mit einem Spannungswandler elektrisch verbunden ist und der Spannungswandler durch ein Mittel zur Kontrolle der Eingangsleistung angesteuert wird. Dabei erzeugt der Spannungswandler an seinem Ausgang eine Spannung, die höher ist als die Ausgangsspannung der Spannungsquelle. Weiterhin ist ein Ladungsspeicher, welcher vom Spannungswandler elektrisch aufgeladen wird, mit dem Ausgang des Spannungswandlers elektrisch verbunden. Der Ladungsspeicher gibt in definierten Zeitabständen jeweils einen Ausgangsstromimpuls an einen Verbraucher von elektrischer Energie mit zeitlich veränderlichem Strombedarf ab. Zudem wird für ein nachfolgendes Zeitintervall eine an den Ladungsspeicher nachzuführende mittlere Leistung ermittelt. In Abhängigkeit von dieser ermittelten mittleren Leistung wird die Höhe der mittleren Eingangsleistung, welche durch den Spannungswandler von der Spannungsquelle abzuziehen bzw. zu entnehmen ist, festgelegt. Der Spannungswandler wird durch das Mittel demgemäß angesteuert, so dass die nachzuführende mittlere Leistung dem Ladungsspeicher zugeführt wird.

Mit Vorteil stellt der Verbraucher eine Sendestufe dar, so dass durch den in definierten Zeitabständen abgegeben Ausgangsstromimpuls von der Sendestufe jeweils ein elektromagnetisches Signal erzeugt wird.

In weiterer vorteilhafter Ausgestaltung der Erfindung kann die am Eingang des Spannungswandlers anliegende Spannung bestimmt werden und in Abhängigkeit dieser anliegenden Spannung und der mittleren Eingangsleistung ein elektrischer Eingangsstrom festgelegt werden, welcher durch den Spannungswandler von der Spannungsquelle abzuziehen ist, und der Spannungswandler durch das Mittel demgemäß angesteuert und mit dem festgelegtem Eingangsstrom versorgt bzw. durchflossen wird.

Während der Zeit, in der die am Eingang des Spannungswandlers anliegende Spannung bestimmt wird, kann die Spannungsquelle von Leistungsverbrauchern des Tastkopfs, insbesondere vom Spannungswandler getrennt werden, so dass eine Spannung bei reduzierter Last für die Spannungsquelle bzw. eine Leerlaufspannung der Spannungsquelle bestimmt wird.

Mit Vorteil wird die am Ladungsspeicher anliegende Spannung bestimmt. Auf Basis der bestimmten am Ladungsspeicher anliegenden Spannung wird die für ein nachfolgendes Zeitintervall an den Ladungsspeicher nachzuführende mittlere Leistung ermittelt. Insbesondere kann zur Ermittlung der an den Ladungsspeicher nachzuführenden mittleren Leistung die am Ladungsspeicher anliegende Spannung mit einem vorgegebenen Soll-Wert für die betreffende Spannung verglichen werden. Die anliegende Spannung kann mit Vorteil nach entsprechender Signalaufbereitung als digitaler Wert vorliegen.

Die Ansteuerung des Spannungswandlers kann vorteilhaft mit Hilfe einer Pulsweitenmodulation erfolgen.

In weiterer Ausgestaltung der Erfindung kann die an den Ladungsspeicher nachzuführende mittlere Leistung für ein Zeitintervall $\Delta T$ ermittelt werden, welches gemäß dem Zusammenhang $\Delta T = n.T$ definiert ist. Dabei stellt T den Zeitabstand dar, in dem der Ladungsspeicher jeweils einen Ausgangsstromimpuls an einen Verbraucher abgibt, und n ist als eine natürliche Zahl größer oder gleich 1 zu verstehen. Mit Vorteil ist n eine Zahl kleiner als 10.

Weiterhin kann ein elektrischer Eingangsstrom, welchen der Spannungswandler von der Spannungsquelle abzieht, innerhalb des Zeitabstands T über einen Zeitraum von mindestens 0,75.T fließen. Insbesondere kann der Zeitraum mindestens 0,85.T, mit Vorteil mindestens 0,90.T betragen. Gemäß einer bevorzugten Ausgestaltung der Erfindung wird der elektrische Eingangsstrom, den der Spannungswandler von der Spannungsquelle abzieht, innerhalb des Zeitabstands T über einen Zeitraum von mindestens 0,75.T konstant gehalten. Insbesondere kann der Zeitraum mindestens 0,85.T, mit Vorteil mindestens 0,90.T betragen.

Ebenso kann die elektrische Leistung, welche der Spannungswandler von der Spannungsquelle abzieht, innerhalb des Zeitabstands T über einen Zeitraum von mindestens 0,75.T konstant gehalten werden. Insbesondere kann der Zeitraum mindestens 0,85.T, mit Vorteil mindestens 0,90.T betragen.

In bevorzugter Ausgestaltung der Erfindung sind die Zeitabstände T gleich groß gewählt.

Mit Vorteil weisen die definierten Zeitabstände T eine Länge im Bereich zwischen 5 ms und 100 ms auf.

In vorteilhafter Weise kann ein Zeitraum, innerhalb welchem der Ausgangsstromimpuls an den Verbraucher abgeben wird, mindestens 10-mal kleiner sein, mit Vorteil mindestens 100-mal klein sein als der Zeitabstand zur Abgabe des nächsten Ausgangsstromimpulses.

Der erfindungsgemäße Tastkopf hat insbesondere den Vorteil, dass die Batterien länger nutzbar sind, bzw. dass mehr Energie der Batterien nutzbar ist, weil eine überaus schonende Abnahme der elektrischen Leistung aus der Batterie möglich ist.

Vorteilhafte Ausbildungen der Erfindung entnimmt man den abhängigen Ansprüchen.

Weitere Einzelheiten und Vorteile des erfindungsgemäßen Tastkopfs und des Verfahrens ergeben sich aus der nachfolgenden Beschreibung von Ausführungsbeispielen anhand der beiliegenden Figuren.

Es zeigen die

Figur 1    eine schematische Darstellung des Tastsystems,

Figur 2a    ein schematischer Schaltungsplan für eine Schaltung in einem Tastkopf,

Figur 2b    ein schematischer Schaltungsplan für einen Spannungswandler,

Figur 3a    ein Diagramm mit aus einem Ladungsspeicher abgegeben Ausgangsstromimpulse bzw. Ausgansleistungen, aufgetragen über der Zeit,

Figur 3b    ein Diagramm mit der Spannung am Ladungsspeicher über der Zeit,

Figur 3c    ein Diagramm mit der dem Ladungsspeicher zugeführten Leistung über der Zeit,

Figur 3d    ein Diagramm mit dem dem Ladungsspeicher zugeführten Strom über der Zeit,

Figur 4a    ein Diagramm mit zwei alternativ am Spannungswandler anliegenden Spannungen, aufgetragen über der Zeit,

Figur 4b    ein Diagramm mit der Eingangsleistung, die durch den Spannungswandler von der Spannungsquelle abgezogen wird, aufgetragen über der Zeit,

Figur 4c    ein Diagramm mit zwei alternativ in den Spannungswandler fließenden Eingangsströmen, aufgetragen über der Zeit,

Figur 5a    ein Diagramm mit der Spannung am Ladungsspeicher über der Zeit gemäß einem zweiten Ausführungsbeispiel,

Figur 5b    ein Diagramm mit der dem Ladungsspeicher zugeführten Leistung über der Zeit gemäß dem zweiten Ausführungsbeispiel,

Figur 5c    ein Diagramm mit der Eingangsleistung, die durch den Spannungswandler von der Spannungsquelle abgezogen wird, aufgetragen über der Zeit gemäß dem zweiten Ausführungsbeispiel,

Figur 5d    ein Diagramm des in den Spannungswandler fließenden Stroms, aufgetragen über der Zeit gemäß dem zweiten Ausführungsbeispiel,

Figur 6a    ein Diagramm der am Spannungswandler anliegenden Spannung, aufgetragen über der Zeit gemäß einem dritten Ausführungsbeispiel,

Figur 6b    ein Diagramm mit der Eingangsleistung, die durch den Spannungswandler von der Spannungsquelle abgezogen wird, aufgetragen über der Zeit gemäß dem dritten Ausführungsbeispiel,

Figur 6c    ein Diagramm des in den Spannungswandler fließenden Stroms, aufgetragen über der Zeit gemäß dem dritten Ausführungsbeispiel,

Figur 7    ein schematischer Ablaufplan des erfindungsgemäßen Verfahrens.

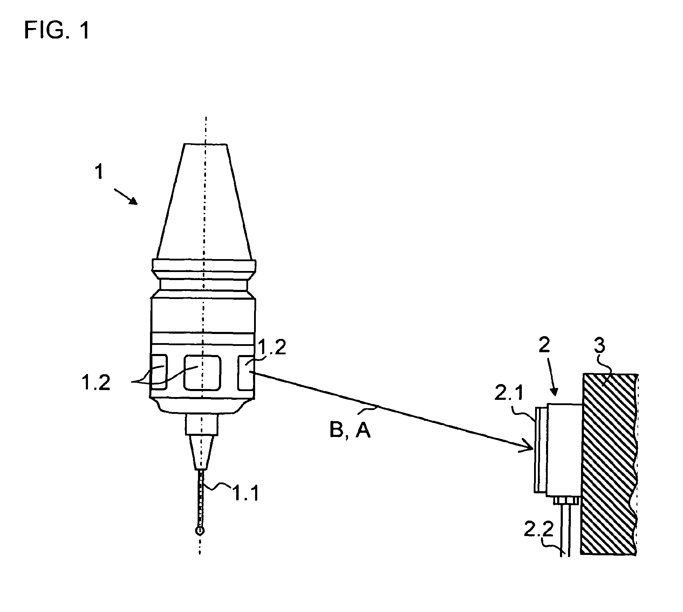

In der Figur 1 ist ein Tastkopf 1 gezeigt, der mittels eines Spannkonus in eine Werkzeugmaschine eingespannt werden kann. Für den Messzweck ist am Tastkopf 1 ein zylindrischer Taststift 1.1 vorgesehen, welcher an einem Ende eine Antastkugel aufweist.

Ferner umfasst das Tastsystem eine Sender-Empfängereinheit 2, welche an einem unbeweglichen Bauteil 3 der Werkzeugmaschine fixiert ist, so dass also der Tastkopf 1 gegenüber der Sender-Empfängereinheit 2 mobil, also relativ zu diesem beweglich ist.

Im gezeigten Ausführungsbeispiel sind über den Umfang des Tastkopfs 1 verteilt sechs Sende/Empfangselemente 1.2 vorgesehen, die jeweils um 60° entlang einer Umfangslinie am Tastkopf 1 versetzt befestigt sind. Mit Hilfe der Sende/Empfangselemente 1.2 können elektromagnetische Signale, hier Infrarot-Signale, ausgesendet werden, welche von der Sender-Empfängereinheit 2 empfangen werden können. Ebenso ist eine entsprechende Kommunikation ausgehend von der Sender-Empfängereinheit 2 zu den Sende-Empfangselementen 1.2 am Tastkopf 1 möglich. Im vorgestellten Ausführungsbeispiel können insbesondere so genannte Bereitschaftssignale B und Antastsignale A vom Tastkopf 1 abgesetzt werden.

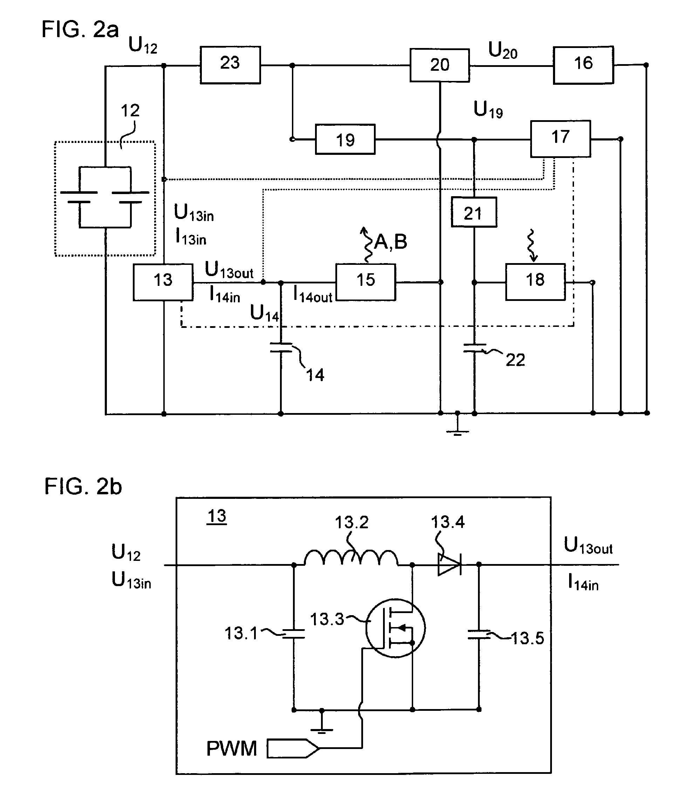

In der Figur 2a ist ein stark vereinfachtes Schaltbild einer Schaltung gezeigt, wie sie gemäß dem ersten Ausführungsbeispiel innerhalb des Tastkopfs 1 auf einer Leiterplatte angeordnet ist. Dementsprechend umfasst die Schaltung eine Spannungsquelle 12, die im gezeigten Ausführungsbeispiel aus zwei Lithium-Batterien mit jeweils einer Nennspannung von 3,6 V besteht, so dass hier auch von einer Gleichspannungsquelle gesprochen werden kann. Die Lithium-Batterien sind parallel geschaltet, so dass die Spannungsquelle 12 im Idealfall eine Spannung $U_{12}$ von 3,6 V abgibt. Der negative Pol der Spannungsquelle 12 ist dabei mit Masse verbunden. Die Spannungsquelle 12 dient zur Energieversorgung von unter anderem einer Sensoreinheit 16, einer CPU 17, einer Sendestufe 15 und einer Empfangsstufe 18. Die Sendestufe 15, welcher ein Ladungsspeicher 14 vorgeschaltet ist, kann auch als Verbraucher mit zeitlich veränderlichem Strombedarf bezeichnet werden. Als Ladungsspeicher 14 wird im vorgestellten Ausführungsbeispiel ein Kondensator mit einer Kapazität $C_{14}$ von 300 $\mu$F eingesetzt. Alternativ können auch mehrere parallel geschaltete Kondensatoren verwendet werden. Ferner umfasst die Schaltung eine RC-Siebungsschaltung, bestehend aus einem Widerstand 21 und einem Kondensator 22.

Um für die betreffenden Bauelemente eine genügend hohe Spannung zur Verfügung stellen zu können, weist die Schaltung Spannungswandler 13, 23 auf. Die Spannungsquelle 12 ist mit einem Spannungswandler 13 elektrisch verbunden und versorgt diesen mit elektrischer Energie. Demnach ist also der Spannungswandler 13 zwischen der Spannungsquelle 12 und dem besagten Verbraucher, also der Sendestufe 15 geschaltet. Der Spannungswandler 13 umfasst gemäß der Figur 2b einen Kondensator 13.1, eine Spule 13.2, einen Transistor 13.3, sowie eine Diode 13.4 und einen weiteren Kondensator 13.5. Diese Bauelemente sind gemäß der Figur 2b verschaltet. Die Kondensatoren 13.1, 13.5 weisen im vorgestellten Ausführungsbeispiel jeweils eine Kapazität von 10 $\mu$F auf. Durch den Spannungswandler 13 ist eine Spannung $U_{13out}$ erzeugbar, die über einer Eingangsspannung $U_{13in}$, also über der Spannung $U_{12}$ der Spannungsquelle 12 liegt.

Angesteuert wird der Transistor 13.3 durch die CPU 17 in einer Weise, dass eine Pulsweitenmodulation PWM vorgenommen werden kann. Wenn der Transistor 13.3 eingeschaltet wird, steigt der Strom durch die Spule 13.2 und es wird entsprechend Energie in dieser gespeichert. Sobald der Transistor 13.3 ausgeschaltet wird, speist die Spule über die Diode 13.4 den Ladungsspeicher 14. Somit kann durch die CPU 17 die Eingangsleistung $P_{13in}$, die der Spannungswandler 13 von der Spannungsquelle 12 abzieht kontrolliert bzw. gesteuert werden.

Gemäß der Figur 2a umfasst die Schaltung nach einem weiteren Spannungswandler 23 zwei Spannungsbegrenzer 19, 20, welche Ausgangsspannungen $U_{19}$, $U_{20}$ liefern, die gleichzeitig jeweils als Eingangsspannung für die Sensoreinheit 16 bzw. für die CPU 17 dienen. Da der elektrische Strom, der durch den Widerstand 21 fließt sehr gering ist, kann in guter Näherung die Eingangsspannung in die Empfangsstufe 18 mit der Spannung $U_{19}$ gleichgesetzt werden.

Um den Tastkopf 1 von einem batteriesparenden Stand-By-Modus in einen Messbetriebsmodus zu überführen, wird von der stationären Sende-Empfangseinheit 2 ein entsprechendes Aktivierungssignal abgesetzt. Das Aktivierungssignal wird von der Empfangsstufe 18 des Tastkopfs 1 von einem Infrarotsignal in ein elektrisches Signal umgewandelt, dieses wird dann zur CPU 17 weitergeleitet. Von der CPU 17 gehen darauf entsprechende Befehle an die relevanten Bauteile im Tastkopf 1, so dass das Tastsystem bzw. der Tastkopf in den Messbetriebsmodus überführt wird.

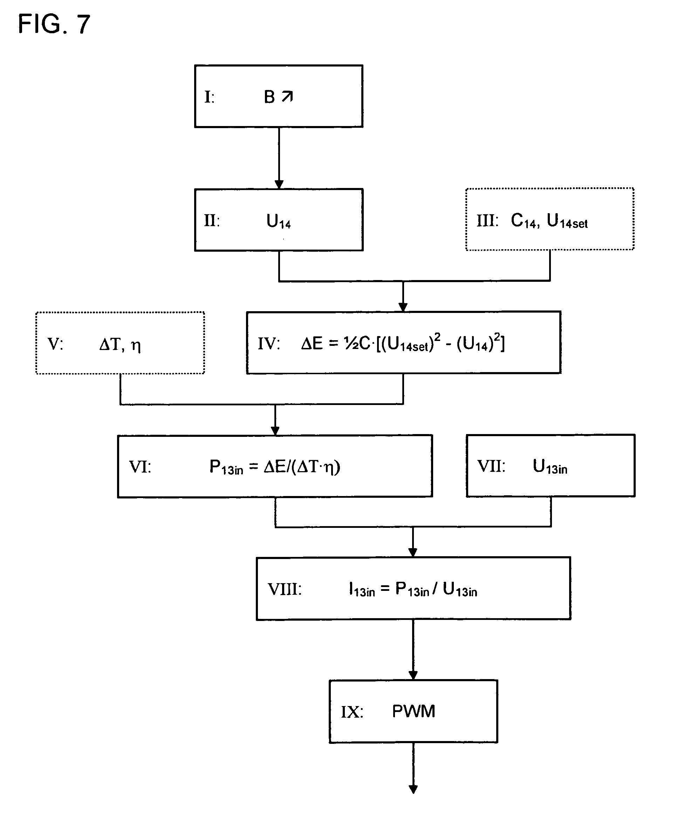

Zur Signalisierung, dass der Messbetriebsmodus läuft, wird vom Tastkopf in definierten Zeitabständen T ein Bereitschaftssignal B abgesetzt, wobei vorliegend im Normalbetrieb ein konstanter Zeitabstand T von 20 ms zwischen dem Senden zweier zeitlich benachbarter Bereitschaftssignale B durch die CPU 17 vorgegeben wird. In der Figur 7, in der ein Ablaufschema für das Verfahren zum Betrieb des Tatkopfes 1 schematisch dargestellt ist, ist das Erzeugen des Bereitschaftssignals B als Schritt I dargestellt.

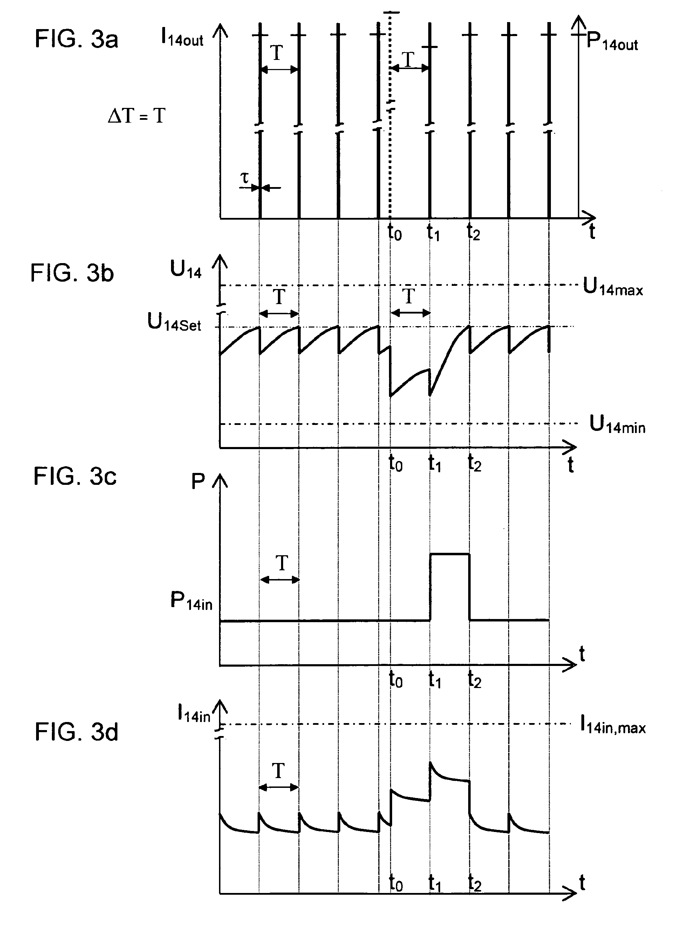

In der Figur 3a ist ein Zeitdiagramm bezüglich des Sendes der Ausgangsstromimpulse $I_{14out}$ gezeigt, die vom Ladungsspeicher 14 in den Zeitabständen T = 20 ms an die Sendestufe 15 abgegeben werden. Durch das Eintreffen des Ausgangsstromimpulses $I_{14out}$ wird von der Sendestufe 15 ein elektromagnetisches Signal erzeugt, das nachfolgend von der Sender-Empfängereinheit 2 empfangen wird. Zunächst soll nur das Aussenden von Bereitschaftssignalen B betrachtet werden, die durch die durchgezogenen senkrechten Linien, also zum Beispiel die vier linken Ausgangsstromimpulse $I_{14out}$ in der Figur 3a, dargestellt sind, also für $t < t_0$. Entsprechend dem Ausgangsstromimpuls $I_{14out}$t wird der Sendestufe 15 eine elektrische Leistung $P_{14out}$ zugeführt, wie dies durch die kurzen waagrechten Striche in Verbindung mit der rechtsliegenden Ordinate in der Figur 3a abgebildet ist. Die Zeiträume $\tau$, in der ein Ausgangsstromimpuls $I_{14out}$ vorliegt, betragen etwa 20 $\mu$s. Durch diese kurzen Zeiträume $\tau$ fließt während eines Ausgangsstromimpulses $I_{14out}$ ein vergleichsweis hoher Strom in der Größenordnung von 8 A in die Sendestufe 15. Gleichermaßen ist die vom Ladungsspeicher 14 abgeführte Leistung $P_{14out}$ während dieser Zeiträume relativ hoch.

In der Figur 3b ist der Verlauf der Spannung $U_{14}$ am Ladungsspeicher 14 dargestellt. Bei jedem Aussenden eines Bereitschaftssignals B fällt die Spannung $U_{14}$ um einige 100 mV ab und steigt dann wieder über die darauffolgenden 20 ms entsprechend dem Zeitabstand T. Nach dem Absetzten des Bereitschaftssignals B wird die tatsächliche Spannung $U_{14}$ am Ladungsspeicher 14 bestimmt. Diese Maßnahme ist im Ablaufschema gemäß Figur 7 als Schritt II angeführt. Dabei wird die Spannung $U_{14}$ gemäß der Figur 2a der CPU 17 zugeführt, wobei die CPU 17 einen A/D-Wandler und eine Spannungsteilerschaltung umfasst, so dass dort ein 12-Bit-Wert als Information über die Höhe der Spannung $U_{14}$ erzeugt wird.

Ferner wird dessen Kapazität $C_{14}$ aus einem Speicher der CPU 17 ausgelesen, wie auch ein Soll-Wert $U_{14Set}$ für die Spannung $U_{14}$ am Ladungsspeicher 14 (Schritt III in Figur 7).

Als nächstes wird dann von der CPU 17 die nachzuführende Energie $\Delta E$ gemäß der Formel

$$\Delta E = \tfrac{1}{2} \cdot C_{14} \cdot [(U_{14Set})^2 - (U_{14})^2]$$

berechnet, wie dies in der Figur 7 als Schritt IV dargestellt ist.

Danach werden das Zeitintervall $\Delta T$, währenddessen eine an den Ladungsspeicher 14 nachzuführende mittlere Leistung $P_{14in}$ anliegen soll, aus dem Speicher der CPU 17 ausgelesen. Ebenso ein hinterlegter Wert $\eta$ für den Wirkungsgrad der betreffenden Schaltung (Schritt V gemäß Figur 7). Da vorliegend $\Delta T = T$ gewählt wurde, wird zunächst der Zeitabstand T, welcher in der CPU 17 hinterlegt ist, ausgelesen.

Die während eines nächsten Zeitintervalls $\Delta T = T$ nachzuführende mittlere Leistung $P_{14in}$ wird dann unter Verwendung der Formel

$$P_{14in} = \Delta E / \Delta T$$

ermittelt. Mit $\Delta T = T$ folgt für das erste Ausführungsbeispiel:

$$P_{14in} = \Delta E / T$$

Unter Berücksichtigung eines Werts $\eta$ für den Wirkungsgrad der betreffenden Schaltung kann nunmehr im Schritt VI nach Figur 7 die Höhe der mittleren Eingangsleistung $P_{13in}$, welche in den Spannungswandler 13 während eines Zeitabstands T von der Spannungsquelle 12 abzuziehen bzw. zu entnehmen ist, gemäß folgendem Zusammenhang festgelegt werden:

$$P_{13in} = P_{14in} / \eta,$$

mit $0 < \eta \le 1$.

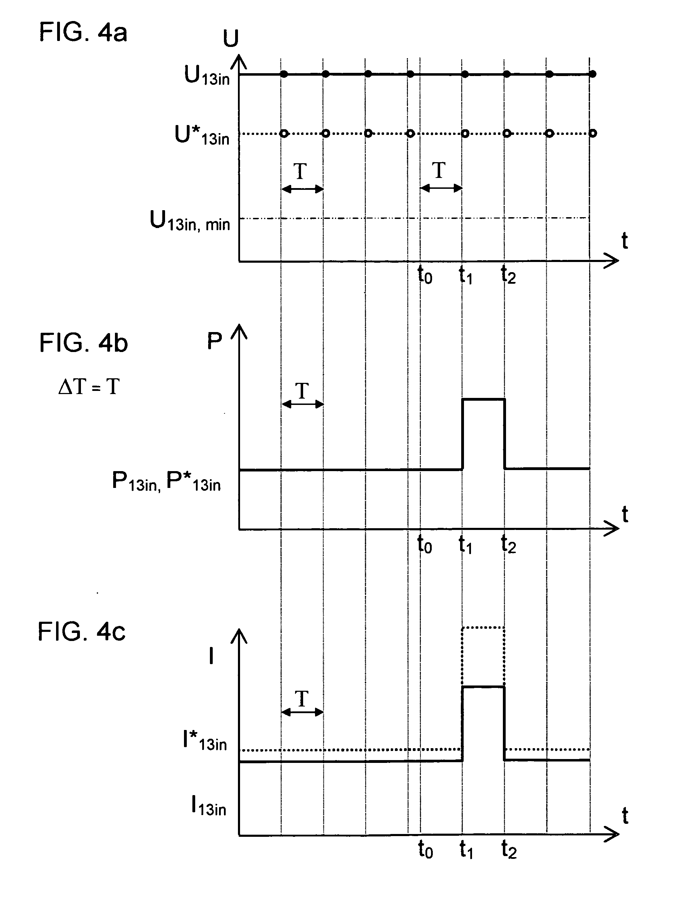

Im nächsten Schritt (Schritt VII in Figur 7) wird die tatsächlich am Spannungswandler 13 anliegende Spannung $U_{13in}$ zu einer mit Punkten hervorgehobenen Zeit bestimmt. Üblicherweise ist diese Spannung $U_{13in}$ weitgehend konstant, da die Spannung $U_{12}$ am Ausgang der Spannungsquelle 12 in dieser kurzen Zeit in der Regel nicht schwankt. Der zeitliche Verlauf der Spannung $U_{13in}$ ist in der Figur 4a dargestellt. Die Bestimmung der Spannung erfolgt ebenfalls in einer Schaltung der CPU 17 mit Hilfe eines A/D-Wandlers (siehe auch die Figur 2a).

Da im Normalbetrieb, während des kontinuierlichen Aussendens der Bereitschaftssignale B, also in den Figuren 3a — 3d und 4a — 4c während der Zeit t< $t_0$, auch eine konstante mittlere Leistung $P_{14in}$ vom Spannungswandler 13 abgezogen wird, ist auch die von der Spannungsquelle 12 abgezogene mittlere Eingangsleistung $P_{13in}$ konstant.

In Kenntnis der erforderlichen Höhe der Eingangsleistung $P_{13in}$ kann für die vorliegende Spannung $U_{13in}$ der durch den Spannungswandler 13 zu fließende Eingangsstrom $I_{13in}$ durch den Zusammenhang

$$I_{13in} = P_{13in} / U_{13in}$$

ermittelt werden, gemäß dem Schritt VIII in Figur 7.

In Abhängigkeit des einzustellenden Eingangsstroms $I_{13in}$ für einen nachfolgenden Zeitraum gemäß dem Zeitanstand T wird von der CPU 17 ein bestimmtes Puls-Pausen-Verhältnis für die Pulsweitenmodulation eingestellt. Folglich wird also der Spannungswandler 13 durch die CPU 17 entsprechend der zuvor ermittelten Eingangsleistung $P_{13in}$, die über den Zeitabstand $\Delta T = T$ gemittelt wurde, angesteuert (siehe Figur2a und Schritt XI in Figur 7). Somit stellt die CPU 17 das Mittel zur Kontrolle der Eingangsleistung $P_{13in}$ dar.

Entsprechend dem zeitlichen Verlauf, wie in der Figur 4b gezeigt, wird dann die Eingangsleistung $P_{13in}$ von der Spannungsquelle 12 abgezogen bzw. entnommen. Demzufolge wird die Leistung $P_{14in}$, gemäß dem Verlauf in Figur 3c dem Ladungsspeicher 14 zugeführt, beziehungsweise wird ein Strom $I_{14in}$, der dem Verlauf nach Figur 3d entspricht, in den Ladungsspeicher 14 fließen. Gemäß dem Ausführungsbeispiel bleibt während der Zeit $t < t_0$ die Eingangsleistung $P_{13in}$ über den gesamten Zeitabstand T jeweils konstant. Auf diese Weise kann eine minimale Belastung der Spannungsquelle 12 erreicht werden. Ebenso wird der maximal auftretende Eingangsstrom $I_{13in}$ (Figur 4c) minimiert, was zur Reduzierung von Verlusten führt. Im vorgestellten Ausführungsbeispiel beträgt der Eingangsstrom $I_{13in}$ etwa 8 mA in diesem Betriebszustand. Somit fließt also innerhalb des Zeitabstands T von 20 ms stets der konstante elektrische Eingangsstrom $I_{13in}$, welchen der Spannungswandler 13 von der Spannungsquelle 12 abzieht. Ebenso wird die elektrische Leistung $P_{13in}$, welche der Spannungswandler 13 von der Spannungsquelle 12 abzieht, innerhalb des gesamten Zeitabstands T konstant gehalten.

Sofern keine Antastung auftritt, wird der Tastkopf 1 in den Zeitabständen T wiederkehrend Bereitschaftssignale B absetzen, welche nachfolgend von der Sender-Empfängereinheit 2 empfangen werden.

Wenn der Taststift 1.1 ausgelenkt wird, so wird in der Sensoreinheit 16 ein digitales Signal erzeugt (Änderung eines Spannungspegels von High auf Low). Dieses Signal wird an die CPU 17 weitergeleitet und dort weiterverarbeitet. Das durch die CPU 17 weiterverarbeitete Signal wird sodann an die Sendestufe 15 geleitet, welche das Antastsignal A in Form von elektromagnetischen Strahlen bzw. Signalen erzeugt. In den gezeigten Ausführungsbeispielen sind die elektromagnetischen Signale als Infrarot-Signale ausgebildet, es können aber beispielsweise auch Funksignale verwendet werden. Die Antastsignale A werden von der stationären Sende-Empfängereinheit 2 empfangen. Im Inneren der Sender-Empfängereinheit 2 werden die Infrarot-Signale in elektrische Signale umgewandelt und aufbereitet. Letztlich gelangen die aufbereiteten elektrischen Signale über ein Kabel 2.2 in eine ortsfeste Folgeelektronik, wo sie weiterverarbeitet werden.

Gemäß dem Ausführungsbeispiel wird zum Zeitpunkt $t = t_0$ ein Antasten festgestellt, was, wie oben beschrieben, das Senden eines Antastsignals A von der Sendestufe 15 zur Sender-Empfängereinheit 2 zur Folge hat. Die hierfür erforderliche elektrische Energie wird weitgehend dem Ladungsspeicher 14 entnommen, so dass also zum Zeitpunkt $t_0$ ein Ausgangsstromimpuls $I_{14out}$ aus dem Ladungsspeicher 14 fließt (siehe Figur 3a) und entsprechend bei $t = t_0$ die Spannung $U_{14}$ am Ladungsspeicher 14 gemäß der Figur 3b abfällt. Da der Ladungsspeicher 14 zum Zeitpunkt $t_0$ noch nicht seine Sollladung erreicht hat bzw. $U_{14}$ zum Zeitpunkt $t_0$ kleiner $U_{14set}$ ist, fällt die Spannung $U_{14}$ weiter ab als dies während des periodischen Aussendens der Bereitschaftssignal B im Normalbetrieb der Fall war. Allerdings liegt die Spannung $U_{14}$ bei $t = t_0$ über einer vorgegebenen Mindestspannung $U_{14min}$, so dass daher ein ordnungsgemäßer Betrieb des Tastkopfs nicht gefährdet ist. Der Ausgangsstromimpuls $I_{14out}$, dem ein Absetzten eines Antastsignals A folgt, ist in der Figur 3a gestrichelt dargestellt. Im vorliegend Ausführungsbeispiel ist dieser Ausgangsstromimpuls $I_{14out}$ größer als die mit durchgezogenen Linien dargestellten Ausgangsstromimpulse $I_{14out}$, die für das Senden der Bereitschaftssignale B erforderlich sind. Die gleiche Betrachtung gilt für die aufgebrachte Leistung $P_{14out}$.

Nachdem ein Antastsignal A abgesetzt wurde, ist ein weiteres Absetzten eines Signals, also eines Antastsignals A oder eines Bereitschaftssignals B in gezeigten Ausführungsbeispiel innerhalb des Zeitabstandes T gesperrt.

Nach dem Absetzten des Bereitschaftssignals B wird zum Zeitpunkt $t = t_1 = t_0 + T$ dann wieder die tatsächliche Spannung $U_{14}$ am Ladungsspeicher 14 bestimmt und die nachzuführende Energie $\Delta E$ gemäß der Formel $\Delta E = \frac{1}{2} \cdot C_{14} \cdot [(U_{14set})^2 - (U_{14})^2]$ berechnet. Da zum Zeitpunkt $t_1$ die Spannung $U_{14}$ am Ladungsspeicher 14 vergleichsweise niedrig ist, wird nun ein höherer Wert als zuvor für die nachzuführende Energie $\Delta E$ berechnet. Somit wird analog zur oben beschriebenen Methode eine an den Ladungsspeicher 14 nachzuführende mittlere Leistung $P_{14in} = \Delta E/T$ ermittelt, da T unverändert bleibt.

Entsprechend wird zum Zeitpunkt $t_1$ unter Berücksichtigung der Werts $\eta$ für den Wirkungsgrad die Höhe der mittleren Eingangsleistung $P_{13in} = P_{14in}/\eta$, welche durch den Spannungswandler 13 von der Spannungsquelle 12 während des nächsten Zeitabstands $T = t_2 — t_1$ entnommen bzw. abgezogen werden muss, berechnet und der in den Spannungswandler einzuleitende Eingangsstrom $I_{13in}$ festgelegt. Nachkommend wird von der CPU 17 ein bestimmtes Puls-Pausen-Verhältnis für die Pulsweitenmodulation eingestellt. Da die Spannung $U_{13in}$ unverändert geblieben ist, wird in dem Zeitraum zwischen $t_1$ und $t_2$ ein höherer Eingangsstrom $I_{13in}$ (Figur 4c) von der Spannungsquelle 12 abgezogen. Entsprechend steigt auch der dem Ladungsspeicher 14 zugeführte Strom $I_{14in}$ (Figur 3d) und die zugeführte mittlere Leistung $P_{14in}$ (Figur 3c) innerhalb des Zeitraums zwischen $t_1$ und $t_2$. Infolgedessen weist die Spannung $U_{14}$ am Ladungsspeicher 14 zum Zeitpunkt $t_2 = t_1 + T$ den Sollwert $U_{14Set}$ auf (Figur 3b).

Danach werden im Normalbetrieb wieder in den Zeitabständen T Bereitschaftssignale B abgesetzt, so dass das Tastsystem wie im oben beschrieben Zeitraum $t < t_0$ arbeitet.

Als Spannungsquelle 12 können beispielsweise unterschiedliche Batterien verwendet werden, die gemäß der Figur 4a unterschiedliche Spannungen $U_{13in}$, $U*_{13in}$ liefern können. Für den Fall $U_{13in} > U*_{13in}$ ergibt sich $I_{13in} < I*_{13in}$, da die in den Spannungswandler 13 einzuspeisende mittlere Eingangsleistung $P_{13in} = P*_{13in}$ gleich bleibt, siehe Figuren 4b und 4c. Der Strom $I_{14in}$ ist weitgehend unabhängig von der Höhe der Spannungen $U_{13in}$, $U*_{13in}$.

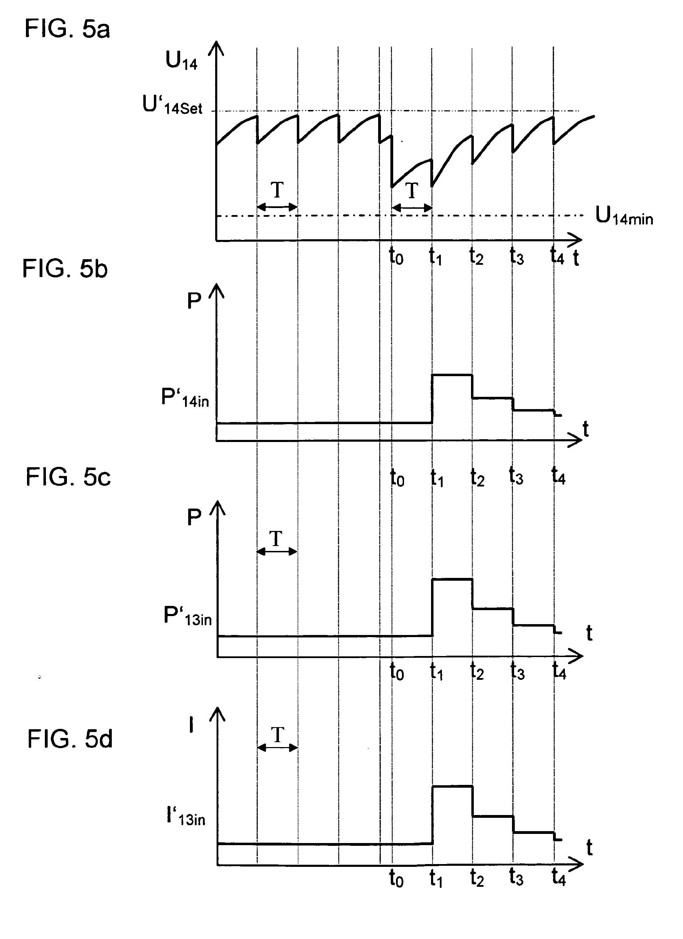

In einem weiteren Ausführungsbeispiel gemäß den Figuren 5a bis 5d wird das Tastsystem analog zum ersten Ausführungsbeispiel betrieben, solange der Tastkopf lediglich Bereitschaftssignale B sendet ($t < t_0$). In diesem Betriebszustand wird also nach dem Senden eines Bereitschaftssignals B die Spannung $U_{14}$ am Ladungsspeicher 14 in den Zeitabständen T in Richtung des Soll-Werts $U'_{14Set}$ gehoben, wobei im zweiten Ausführungsbeispiel der Soll-Wert $U'_{14Set}$ etwas höher festgesetzt wird als der Soll-Wert $U_{14Set}$ des ersten Ausführungsbeispiels. Sobald ein Antasten erfolgt, in den Diagrammen gemäß den Figuren 5a bis 5d zum Zeitpunkt $t = t_0$, wird letztlich das Senden des Antastsignals A von der Sendestufe 15 zur Sender-Empfängereinheit 2 ausgelöst und dem Ladungsspeicher 14 die hierfür erforderliche elektrische Energie entzogen, so dass bei $t = t_0$ die Spannung $U_{14}$ am Ladungsspeicher 14 abfällt. Da auch im zweiten Ausführungsbeispiel zum Zeitpunkt $t_0$ die Spannung $U_{14}$ kleiner $U'_{14Set}$ ist, fällt die Spannung $U_{14}$ weiter ab als dies während des periodischen Aussendens der Bereitschaftssignale B der Fall war. Nach dem Absetzten des Antastsignals A wird auch im zweiten Ausführungsbeispiel ein weiteres Absetzten eines Signals, also eines Antastsignals A oder eines Bereitschaftssignals B innerhalb des Zeitabstandes T unterbunden.

Wie im ersten Ausführungsbeispiel wird gleichfalls im zweiten Ausführungsbeispiel nach dem Absetzten des Bereitschaftssignals B am Zeitpunkt $t = t_1$ die tatsächliche Spannung $U_{14}$ am Ladungsspeicher 14 bestimmt. Allerdings wird nun die nachzuführende Energie $\Delta E'$ gemäß der Formel

$$\Delta E' = \frac{1}{2} \cdot \{C_{14} \cdot \frac{1}{2} [(U'_{14Set})^2 - (U_{14})^2]\}$$

berechnet (hier gilt also $\Delta E' = \frac{1}{2} \Delta E$, dieser Zusammenhang trifft im Übrigen im zweiten Ausführungsbeispiel für alle Zeitpunkte zu, an denen die die tatsächliche Spannung $U_{14}$ am Ladungsspeicher 14 bestimmt wird).

Somit wird nun eine an den Ladungsspeicher 14 nachzuführende Leistung nach der Formel $P'_{14in} = \Delta E'/T$ ermittelt.

Entsprechend wird die Höhe der Eingangsleistung $P'_{13in} = \Delta E'/(T \cdot \eta) = P'_{14in}/\eta$, welche der Spannungswandler 13 von der Spannungsquelle 12 abziehen muss, berechnet und der in den Spannungswandler 13 einzuleitende Eingangsstrom $I'_{13in}$ festgelegt. Von der CPU 17 wird ein bestimmtes Puls-Pausen-Verhältnis für die Pulsweitenmodulation abhängig vom zuvor bestimmten Eingangsstrom $I'_{13in}$ eingestellt. Entsprechend steigt die dem Ladungsspeicher 14 zugeführte Leistung $P'_{14in}$ innerhalb des Zeitraums zwischen $t_1$ und $t_2$, jedoch nicht im dem Maße wie dies im ersten Ausführungsbeispiel der Fall war (siehe Figur 5b).

Demgemäß nähert sich die Höhe der Spannung $U_{14}$ am Ladungsspeicher 14 asymptotisch dem Soll-Wert $U'_{14Set}$, wie in der Figur 5a gezeigt. Da der Tastkopf 1 problemlos bei einer Spannung $U_{14}$ betreibbar ist, welche zum Beispiel 60% von $U'_{14set}$ beträgt, spielt es für den einwandfreien Betrieb des Tastkopfs 1 keine Rolle, dass rein rechnerisch die Spannung $U_{14}$ dem Soll-Wert $U'_{14Set}$ nicht vollständig erreicht. Im zweiten Ausführungsbeispiel wurde also der Zeitraum für die Nachführung der elektrischen Energie vergrößert, ohne dass jedoch die erforderliche Mindestspannung $U_{14min}$ am Ladungsspeicher 14 unterschritten worden ist. Für den Fall, dass innerhalb des Zeitraums zwischen $t_1$ und $t_3$ ein oder mehrere Antastvorgänge auftreten, würde dann eine entsprechende automatische Nachjustierung des in den Spannungswandler einzuleitenden Eingangsstroms $I'_{13in}$ erfolgen, so dass auch in diesem Fall die erforderliche Mindestspannung $U_{14min}$ am Ladungsspeicher 14 nicht unterschritten werden würde.

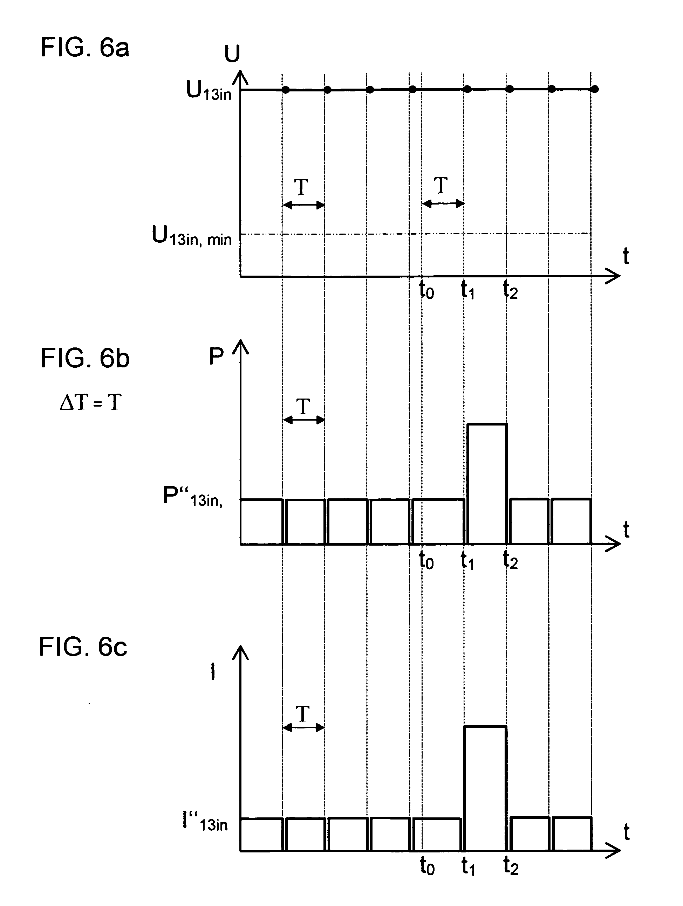

Anhand der Figuren 6a bis 6c ist ein drittes Ausführungsbeispiel gezeigt. Die Abgabe der Ausgangsstromimpulse $I_{14out}$ des Ladungsspeichers 14 an die Sendestufe 15 erfolgt analog zum ersten Ausführungsbeispiel, also gemäß der Figur 3a. Gleichermaßen sind auch die Figuren 3b, 3c und näherungsweise zudem 3d auch für das dritte Ausführungsbeispiel anwendbar. Die am Spannungswandler 13 anliegende Spannung $U_{13in}$ soll gegenüber dem ersten Ausführungsbeispiel unverändert bleiben, so wie die in der Figur 6a dargestellt ist.

Im Unterschied zu den vorhergegangenen Ausführungsbeispielen wird allerdings nun extrem kurzzeitig die Eingangsleistung $P''_{13in}$ auf null gesetzt (Figur 6b) bzw. es wird die Zufuhr des eingeleiteten Eingangsstroms $I''_{13in}$ kurz unterbrochen. Genau zu diesen Zeitpunkten wird jeweils die tatsächliche Spannung $U_{13in}$ bestimmt, so dass hier quasi die Leerlaufspannung der Spannungsquelle 12 gemessen wird. Die so bestimmte Spannung $U_{13in}$ ist also die Grundlage für die Berechnung der Höhe des mittleren Eingangsstroms $I''_{13in}$, beziehungsweise der Höhe der mittleren Eingangsleistung $P''_{13in}$, welche durch den Spannungswandler 13 von der Spannungsquelle 12 abzuziehen sind.

Dies hat zur Folge, dass eine schwächer werdende Batterie als Spannungsquelle 12 nicht unmittelbar durch das Aufladen des Ladungsspeichers 14 zum Zusammenbruch gebracht wird. Denn wenn die Spannung $U_{13in}$ unter Last bestimmt wird, ist diese bei einer schwachen Batterie als Spannungsquelle 12 niedriger als die Leerlaufspannung. Bei niedrigerer Spannung $U_{13in}$ wird aber der einzuleitende Eingangsstrom $I_{13in}$ höher berechnet und die CPU 17 würde den Spannungswandler 13 so ansteuern, dass dieser eine höhere Eingangsleitung $P_{13in}$ von der Spannungsquelle 12 abziehen würde. Entsprechend würde eine schwache Batterie als Spannungsquelle 12 schnell vollständig zusammenbrechen. Durch die Methode gemäß dem dritten Ausführungsbeispiel kann zumindest ein verzögertes Ausfallen der Spannungsquelle 12 erreicht werden, für den Fall, dass sich die Spannungsquelle 12 wieder erholt kann diese Methode sogar die Lebensdauer der Batterie als Spannungsquelle 12 erheblich verlängern.

Ansonsten entspricht das dritte Ausführungsbeispiel weitgehend den beiden ersten Ausführungsbeispielen.

Die Darstellungen in den Figuren 3a bis 6c sind nicht maßstäblich, sondern sollen nur qualitativ zeitliche Zusammenhänge aufzeigen.

**Patentansprüche**

1. Tastkopf (1), welcher zu dessen Energieversorgung eine Spannungsquelle (12) aufweist, wobei die Spannungsquelle (12) mit einem Spannungswandler (13) elektrisch verbunden ist und der Spannungswandler (13) durch ein Mittel (17) zur Kontrolle der Eingangsleistung ($P_{13in}$, $P'_{13in}$, $P''_{13in}$) ansteuerbar ist, wobei am Ausgang des Spannungswandlers (13) eine Spannung ($U_{13out}$) erzeugbar ist, die höher ist als die Ausgangsspannung ($U_{12}$, $U_{13in}$) der Spannungsquelle (12), wobei weiterhin ein Ladungsspeicher (14) mit dem Ausgang des Spannungswandlers (13) elektrisch verbunden ist, welcher vom Spannungswandler (13) elektrisch aufladbar ist, wobei der Tastkopf (1) so konfiguriert ist, dass

   - ein Ausgangsstromimpuls ($I_{14out}$) durch den Ladungsspeicher (14) in definierten Zeitabständen (T) an einen Verbraucher (15) abgebbar ist,
   - für ein nachfolgendes Zeitintervall ($\Delta T$) eine an den Ladungsspeicher (14) nachzuführende mittlere Leistung ($P_{14in}$, $P'_{14in}$, $P''_{14in}$) ermittelbar ist,
   - in Abhängigkeit von dieser ermittelten mittleren Leistung ($P_{14in}$, $P'_{14in}$, $P''_{14in}$) die Höhe der mittleren Eingangsleistung ($P_{13in}$, $P'_{13in}$, $P''_{13in}$), welche durch den Spannungswandler (13) von der Spannungsquelle (12) abzuziehen ist, festlegbar ist, und der Spannungswandler (13) durch das Mittel (17) demgemäß ansteuerbar ist.

**2.** Tastkopf (1) gemäß dem Anspruch 1, wobei der Verbraucher (15) eine Sendestufe darstellt, so dass von der Sendestufe ein elektromagnetisches Signal (A, B) erzeugbar ist.

**3.** Tastkopf (1) gemäß dem Anspruch 1 oder 2, wobei der Spannungswandler (13) einen Schalter (13.3), insbesondere in Form eines Transistors, aufweist, der mit dem Mittel (17) zur Kontrolle der Eingangsleistung ($P_{13in}$, $P'_{13in}$, $P''_{13in}$) elektrisch verbunden ist.

**4.** Tastkopf (1) gemäß einem der vorhergehenden Ansprüche, wobei der Tastkopf (1) eine Schaltung zur Bestimmung einer am Eingang des Spannungswandlers (13) anliegenden Spannung ($U_{12}$, $U_{13in}$) umfasst.

**5.** Tastkopf (1) gemäß einem der vorhergehenden Ansprüche, wobei der Tastkopf (1) eine Schaltung zur Bestimmung einer am Ladungsspeicher (14) anliegenden Spannung ($U_{14}$, $U_{13out}$) umfasst.

**6.** Tastkopf (1) gemäß einem der vorhergehenden Ansprüche, wobei das Mittel (17) zur Kontrolle der Eingangsleistung ($P_{13in}$, $P'_{13in}$, $P''_{13in}$) eine Schaltung zur Bestimmung einer am Eingang des Spannungswandlers (13) anliegende Spannung ($U_{12}$, $U_{13in}$) und / oder eine Schaltung zur Bestimmung einer am Ladungsspeicher (14) anliegenden Spannung ($U_{14}$, $U_{13out}$) umfasst.

**7.** Verfahren zum Betreiben eines Tastkopfs (1), welcher zu dessen Energieversorgung eine Spannungsquelle (12) aufweist, wobei die Spannungsquelle (12) mit einem Spannungswandler (13) elektrisch verbunden ist und der Spannungswandler (13) durch ein Mittel (17) zur Kontrolle der Eingangsleistung ($P_{13in}$, $P'_{13in}$, $P''_{13in}$) angesteuert wird, wobei der Spannungswandler (13) an seinem Ausgang eine Spannung ($U_{13out}$) erzeugt, die höher ist als die Ausgangsspannung ($U_{12}$, $U_{13in}$) der Spannungsquelle (12), wobei weiterhin ein Ladungsspeicher (14) mit dem Ausgang des Spannungswandlers (13) elektrisch verbunden ist, welcher vom Spannungswandler (13) elektrisch aufgeladen wird, wobei

- der Ladungsspeicher (14) in definierten Zeitabständen (T) einen Ausgangsstromimpuls ($I_{14out}$) an einen Verbraucher (15) abgibt,
- für ein nachfolgendes Zeitintervall ($\Delta T$) eine an den Ladungsspeicher (14) nachzuführende mittlere Leistung ($P_{14in}$, $P'_{14in}$, $P''_{14in}$) ermittelt wird,
- in Abhängigkeit von dieser ermittelten mittleren Leistung ($P_{14in}$, $P'_{14in}$, $P''_{14in}$) die Höhe der mittleren Eingangsleistung ($P_{13in}$, $P'_{13in}$, $P''_{13in}$), welche durch den Spannungswandler (13) von der Spannungsquelle (12) abzuziehen ist, festgelegt, und der Spannungswandler (13) durch das Mittel (17) demgemäß angesteuert wird.

**8.** Verfahren zum Betreiben eines Tastkopfs (1) gemäß dem Anspruch 7, wobei die am Eingang des Spannungswandlers (13) anliegende Spannung ($U_{12}$, $U_{13in}$) bestimmt wird und in Abhängigkeit dieser anliegenden Spannung ($U_{12}$, $U_{13in}$) und der mittleren Eingangsleistung ($P_{13in}$, $P'_{13in}$, $P''_{13in}$) ein elektrischer Eingangsstrom ($I_{13in}$, $I'_{13in}$, $I''_{13in}$) festgelegt wird, welcher durch den Spannungswandler (13) von der Spannungsquelle (12) abzuziehen ist, und der Spannungswandler (13) durch das Mittel (17) demgemäß angesteuert und mit dem festgelegtem Eingangsstrom ($I_{13in}$, $I'_{13in}$, $I''_{13in}$) versorgt wird.

**9.** Verfahren zum Betreiben eines Tastkopfs (1) gemäß einem der Ansprüche 7 oder 8, wobei die am Ladungsspeicher (14) anliegende Spannung ($U_{14}$, $U_{13out}$) bestimmt wird auf dessen Basis die für ein nachfolgendes Zeitintervall ($\Delta T$) an den Ladungsspeicher (14) nachzuführende mittlere Leistung ($P_{14in}$, $P'_{14in}$, $P''_{14in}$) ermittelt wird.

**10.** Verfahren zum Betreiben eines Tastkopfs (1) gemäß einem der Ansprüche 7 bis 9, wobei die Ansteuerung des Spannungswandlers (13) mit Hilfe einer Pulsweitenmodulation oder einer Pulsfrequenzmodulation erfolgt.

**11.** Verfahren zum Betreiben eines Tastkopfs (1) gemäß einem der Ansprüche 7 bis 10, wobei die an den Ladungsspeicher (14) nachzuführende mittlere Leistung ($P_{14in}$, $P'_{14in}$, $P''_{14in}$) für ein Zeitintervall ($\Delta T$) ermittelt wird, gemäß dem Zusammenhang Zeitintervall an. Zeitabsand, mit n als eine natürliche Zahl größer oder gleich 1.

**12.** Verfahren zum Betreiben eines Tastkopfs (1) gemäß einem der Ansprüche 7 bis 11, wobei ein elektrischer Eingangsstrom ($I_{13in}$, $I'_{13in}$, $I''_{13in}$), welchen der Spannungswandler (13) von der Spannungsquelle (12) abzieht, innerhalb des Zeitabstands (T) über einen Zeitraum von mindestens 0,75·Zeitabstand fließt.

**13.** Verfahren zum Betreiben eines Tastkopfs (1) gemäß einem der Ansprüche 7 bis 12, wobei ein elektrischer Eingangsstrom ($I_{13in}$, $I'_{13in}$, $I''_{13in}$), den der Spannungswandler (13) von der Spannungsquelle (12) abzieht, innerhalb des Zeitabstands (T) über einen Zeitraum von mindestens 0,75·Zeitabstand konstant gehalten wird.

**14.** Verfahren zum Betreiben eines Tastkopfs (1) gemäß einem der Ansprüche 7 bis 13, wobei die elektrische Leistung ($P_{13in}$, $P'_{13in}$, $P''_{13in}$), welche der Span-

nungswandler (13) von der Spannungsquelle (12) abzieht, innerhalb des Zeitabstands (T) über einen Zeitraum von mindestens 0,75·Zeitabstand konstant gehalten wird.

15. Verfahren zum Betreiben eines Tastkopfs (1) gemäß einem der Ansprüche 7 bis 14, wobei die definierten Zeitabstände (T) gleich groß sind.

16. Verfahren zum Betreiben eines Tastkopfs (1) gemäß einem der Ansprüche 7 bis 15, wobei ein Zeitraum ($\tau$), in welchem der Ausgangsstromimpuls ($I_{14out}$) an den Verbraucher (15) abgeben wird, mindestens 10-mal kleiner ist als der Zeitabstand (T) zur Abgabe des nächsten Ausgangsstromimpulses ($I_{14out}$).

17. Verfahren zum Betreiben eines Tastkopfs (1) gemäß einem der Ansprüche 7 bis 16, wobei der Verbraucher (15) eine Sendestufe darstellt, so dass von der Sendestufe ein elektromagnetisches Signal (A, B) erzeugt wird.

**Claims**

1. Sensing head (1) which has a voltage source (12) in order to be supplied with energy, wherein the voltage source (12) is electrically connected to a voltage converter (13) and the voltage converter (13) can be driven by a means (17) for controlling the input power ($P_{13in}$, $P'_{13in}$, $P''_{13in}$), wherein a voltage ($U_{13out}$) which is higher than the output voltage ($U_{12}$, $U_{13in}$) of the voltage source (12) can be generated at the output of the voltage converter (13), wherein furthermore a charge storage means (14) which can be electrically charged by the voltage converter (13) is electrically connected to the output of the voltage converter (13), wherein the sensing head (1) is designed such that

   - an output current pulse ($I_{14out}$) can be output to a load (15) at defined intervals (T) by the charge storage means (14),
   - an average power ($P_{14in}$, $P'_{14in}$, $P''_{14in}$) which is intended to be subsequently supplied to the charge storage means (14) can be determined for a subsequent time interval ($\Delta$T),
   - the level of the average input power ($P_{13in}$, $P'_{13in}$, $P''_{13in}$) which is intended to be drawn from the voltage source (12) by the voltage converter (13) can be defined as a function of the said determined average power ($P_{14in}$, $P'_{14in}$, $P''_{14in}$), and the voltage converter (13) can be accordingly driven by the means (17).

2. Sensing head (1) according to Claim 1, wherein the load (15) represents a transmission stage, and therefore an electromagnetic signal (A, B) can be generated by the transmission stage.

3. Sensing head (1) according to Claim 1 or 2, wherein the voltage converter (13) has a switch (13.3), in particular in the form of a transistor, which is electrically connected to the means (17) for controlling the input power ($P_{13in}$, $P'_{13in}$, $P''_{13in}$).

4. Sensing head (1) according to one of the preceding claims, wherein the sensing head (1) comprises a circuit for determining a voltage ($U_{12}$, $U_{13in}$) which is applied to the input of the voltage converter (13).

5. Sensing head (1) according to one of the preceding claims, wherein the sensing head (1) comprises a circuit for determining a voltage ($U_{14}$, $U_{13out}$) which is applied to the charge storage means (14).

6. Sensing head (1) according to one of the preceding claims, wherein the means (17) for controlling the input power ($P_{13in}$, $P'_{13in}$, $P''_{13in}$) comprises a circuit for determining a voltage ($U_{12}$, $U_{13in}$) which is applied to the input of the voltage converter (13) and/or a circuit for determining a voltage ($U_{14}$, $U_{13out}$) which is applied to the charge storage means (14).

7. Method of operating a sensing head (1) which has a voltage source (12) in order to be supplied with energy, wherein the voltage source (12) is electrically connected to a voltage converter (13) and the voltage converter (13) is driven by a means (17) for controlling the input power ($P_{13in}$, $P'_{13in}$, $P''_{13in}$), wherein the voltage converter (13) generates at its output a voltage ($U_{13out}$) which is higher than the output voltage ($U_{12}$, $U_{13in}$) of the voltage source (12), wherein furthermore a charge storage means (14) which is electrically charged by the voltage converter (13) is electrically connected to the output of the voltage converter (13), wherein

   - the charge storage means (14) outputs an output current pulse ($I_{14out}$) to a load (15) at defined intervals (T),
   - an average power ($P_{14in}$, $P'_{14in}$, $P''_{14in}$) which is intended to be subsequently supplied to the charge storage means (14) can be determined for a subsequent time interval ($\Delta$T),
   - the level of the average input power ($P_{13in}$, $P'_{13in}$, $P''_{13in}$) which is intended to be drawn from the voltage source (12) by the voltage converter (13) is defined as a function of the said determined average power ($P_{14in}$, $P'_{14in}$, $P''_{14in}$), and the voltage converter (13) is accordingly driven by the means (17).

8. Method of operating a sensing head (1) according to Claim 7, wherein the voltage ($U_{12}$, $U_{13in}$) which is applied to the input of the voltage converter (13) is determined and an electrical input current ($I_{13in}$, $I'_{13in}$, $I''_{13in}$) which is intended to be drawn from the voltage source (12) by the voltage converter (13) is defined as a function of the said applied voltage ($U_{12}$, $U_{13in}$) and the average input power ($P_{13in}$, $P'_{13in}$, $P''_{13in}$), and the voltage converter (13) is accordingly driven by the means (17) and supplied with the defined input current ($I_{13in}$, $I'_{13in}$, $I''_{13in}$).

9. Method of operating a sensing head (1) according to either of Claims 7 and 8, wherein the voltage ($U_{14}$, $U_{13out}$) which is applied to the charge storage means (14) is determined, the average power ($P_{14in}$, $P'_{14in}$, $P''_{14in}$) which is intended to be subsequently supplied to the charge storage means (14) for a subsequent time interval ($\Delta T$) being determined on the basis of the said voltage which is applied to the charge storage means.

10. Method of operating a sensing head (1) according to one of Claims 7 to 9, wherein the voltage converter (13) is driven with the aid of pulse-width modulation or pulse-frequency modulation.

11. Method of operating a sensing head (1) according to one of Claims 7 to 10, wherein the average power ($P_{14in}$, $P'_{14in}$, $P''_{14in}$) which is intended to be subsequently supplied to the charge storage means (14) is determined for a time interval ($\Delta T$) in accordance with the relationship time interval = n · interval, where n is a natural number greater than or equal to 1.

12. Method of operating a sensing head (1) according to one of Claims 7 to 11, wherein an electric input current ($I_{13in}$, $I'_{13in}$, $I''_{13in}$) which the voltage converter (13) draws from the voltage source (12) flows within the interval (T) over a time period of at least 0.75 · interval.

13. Method of operating a sensing head (1) according to one of Claims 7 to 12, wherein an electric input current ($I_{13in}$, $I'_{13in}$, $I''_{13in}$) which the voltage converter (13) draws from the voltage source (12) is kept constant within the interval (T) over a time period of at least 0.75 · interval.

14. Method of operating a sensing head (1) according to one of Claims 7 to 13, wherein the electrical power ($P_{13in}$, $P'_{13in}$, $P''_{13in}$) which the voltage converter (13) draws from the voltage source (12) is kept constant within the interval (T) over a time period of at least 0.75 · interval.

15. Method of operating a sensing head (1) according to one of Claims 7 to 14, wherein the defined intervals (T) are of equal magnitude.

16. Method of operating a sensing head (1) according to one of Claims 7 to 15, wherein a time period ($\tau$) in which the output current pulse ($I_{14out}$) is output to the load (15) is at least 10 times shorter than the interval (T) for outputting the next output current pulse ($I_{14out}$).

17. Method of operating a sensing head (1) according to one of Claims 7 to 16, wherein the load (15) represents a transmission stage, and therefore an electromagnetic signal (A, B) is generated by the transmission stage.

**Revendications**

1. Tête de palpage (1) qui présente, pour son alimentation en énergie, une source de tension (12), la source de tension (12) étant reliée électriquement avec un convertisseur de tension (13) et le convertisseur de tension (13) pouvant être commandé par des moyens (17) de contrôle de la puissance d'entrée ($P_{13in}$, $P'_{13in}$, $P''_{13in}$), une tension ($U_{13out}$) pouvant être générée à la sortie du convertisseur de tension (13), laquelle est supérieure à la tension de sortie ($U_{12}$, $U_{13in}$) de la source de tension (12), un accumulateur de charge (14) étant en outre relié électriquement avec la sortie du convertisseur de tension (13), lequel peut être chargé électriquement par le convertisseur de tension (13), la tête de palpage (1) étant configurée de telle sorte que

- une impulsion de courant de sortie ($I_{14out}$) peut être délivrée à une charge (15) par l'accumulateur de charge (14) à des laps de temps (T) définis,
- une puissance moyenne ($P_{14in}$, $P'_{14in}$, $P''_{14in}$) à asservir sur l'accumulateur de charge (14) peut être déterminée pendant un intervalle de temps suivant ($\Delta T$),
- le niveau de la puissance d'entrée ($P_{13in}$, $P'_{13in}$, $P''_{13in}$) moyenne qui doit être soutirée de la source de tension (12) par le convertisseur de tension (13) peut être défini en fonction de cette puissance moyenne ($P_{14in}$, $P'_{14in}$, $P''_{14in}$) déterminée, et le convertisseur de tension (13) peut être commandé en conséquence par les moyens (17).

2. Tête de palpage (1) selon la revendication 1, dans laquelle la charge (15) représente un étage d'émission, de sorte qu'un signal électromagnétique (A, B) peut être généré par l'étage d'émission.

3. Tête de palpage (1) selon la revendication 1 ou 2, dans laquelle le convertisseur de tension (13) présente un commutateur (13.3), notamment sous la forme d'un transistor, qui est relié électriquement avec les moyens (17) de contrôle de la puissance

d'entrée ($P_{13in}$, $P'_{13in}$, $P''_{13in}$).

**4.** Tête de palpage (1) selon l'une des revendications précédentes, dans laquelle la tête de palpage (1) comprend un circuit pour déterminer une tension ($U_{12}$, $U_{13in}$) appliquée à l'entrée du convertisseur de tension (13).

**5.** Tête de palpage (1) selon l'une des revendications précédentes, dans laquelle la tête de palpage (1) comprend un circuit pour déterminer une tension ($U_{14}$, $U_{13out}$) appliquée aux bornes l'accumulateur de charge (14).

**6.** Tête de palpage (1) selon l'une des revendications précédentes, dans laquelle les moyens (17) de contrôle de la puissance d'entrée ($P_{13in}$, $P'_{13in}$, $P''_{13in}$) comprennent un circuit pour déterminer une tension ($U_{12}$, $U_{13in}$) appliquée à l'entrée du convertisseur de tension (13) et/ou un circuit pour déterminer une tension ($U_{14}$, $U_{13out}$) appliquée aux bornes de l'accumulateur de charge (14).

**7.** Procédé pour faire fonctionner une tête de palpage (1) qui présente, pour son alimentation en énergie, une source de tension (12), la source de tension (12) étant reliée électriquement avec un convertisseur de tension (13) et le convertisseur de tension (13) étant commandé par des moyens (17) de contrôle de la puissance d'entrée ($P_{13in}$, $P'_{13in}$, $P''_{13in}$), le convertisseur de tension (13) générant une tension ($U_{13out}$) à sa sortie, laquelle est supérieure à la tension de sortie ($U_{12}$, $U_{13in}$) de la source de tension (12), un accumulateur de charge (14) étant en outre relié électriquement avec la sortie du convertisseur de tension (13), lequel est chargé électriquement par le convertisseur de tension (13), procédé selon lequel

- l'accumulateur de charge (14) délivre une impulsion de courant de sortie ($I_{14out}$) à une charge (15) à des laps de temps (T) définis,
- une puissance moyenne ($P_{14in}$, $P'_{14in}$, $P''_{14in}$) à asservir sur l'accumulateur de charge (14) est déterminée pendant un intervalle de temps suivant ($\Delta T$),
- le niveau de la puissance d'entrée ($P_{13in}$, $P'_{13in}$, $P''_{13in}$) moyenne qui doit être soutirée de la source de tension (12) par le convertisseur de tension (13) est défini en fonction de cette puissance moyenne ($P_{14in}$, $P'_{14in}$, $P''_{14in}$) déterminée, et le convertisseur de tension (13) est commandé en conséquence par les moyens (17).

**8.** Procédé pour faire fonctionner une tête de palpage (1) selon la revendication 7, selon lequel la tension ($U_{12}$, $U_{13in}$) appliquée à l'entrée du convertisseur de tension (13) est déterminée et un courant d'entrée électrique ($I_{13in}$, $I'_{13in}$, $I''_{13in}$) est défini en fonction de cette tension ($U_{12}$, $U_{13in}$) appliquée et de la puissance d'entrée ($P_{13in}$, $P'_{13in}$, $P''_{13in}$) moyenne, lequel doit être soutiré de la source de tension (12) par le convertisseur de tension (13), et le convertisseur de tension (13) est commandé en conséquence par les moyens (17) et alimenté avec le courant d'entrée ($I_{13in}$, $I'_{13in}$, $I''_{13in}$) défini.

**9.** Procédé pour faire fonctionner une tête de palpage (1) selon la revendication 7 ou 8, selon lequel la tension ($U_{14}$, $U_{13out}$) appliquée aux bornes de l'accumulateur de charge (14) est déterminée et la puissance moyenne ($P_{14in}$, $P'_{14in}$, $P''_{14in}$) à asservir sur l'accumulateur de charge (14) pendant un intervalle de temps suivant ($\Delta T$) est déterminée en se basant sur celle-ci.

**10.** Procédé pour faire fonctionner une tête de palpage (1) selon l'une des revendications 7 à 9, selon lequel la commande du convertisseur de tension (13) s'effectue à l'aide d'une modulation d'impulsion en largeur ou d'une modulation de la fréquence d'impulsion.

**11.** Procédé pour faire fonctionner une tête de palpage (1) selon l'une des revendications 7 à 10, selon lequel la puissance moyenne ($P_{14in}$, $P'_{14in}$, $P''_{14in}$) à asservir sur l'accumulateur de charge (14) est déterminée pendant un intervalle de temps ($\Delta T$) conformément à la relation Intervalle de temps = n.Laps de temps, n étant un entier naturel supérieur ou égal à 1.

**12.** Procédé pour faire fonctionner une tête de palpage (1) selon l'une des revendications 7 à 11, selon lequel un courant d'entrée électrique ($I_{13in}$, $I'_{13in}$, $I''_{13in}$) que le convertisseur de tension (13) soutire de la source de tension (12) circule durant le laps de temps (T) sur une période au moins égale à 0,75.Laps de temps.

**13.** Procédé pour faire fonctionner une tête de palpage (1) selon l'une des revendications 7 à 12, selon lequel un courant d'entrée électrique ($I_{13in}$, $I'_{13in}$, $I''_{13in}$) que le convertisseur de tension (13) soutire de la source de tension (12) est maintenu constant durant le laps de temps (T) sur une période au moins égale à 0,75.Laps de temps.

**14.** Procédé pour faire fonctionner une tête de palpage (1) selon l'une des revendications 7 à 13, selon lequel la puissance électrique ($P_{13in}$, $P'_{13in}$, $P''_{13in}$) que le convertisseur de tension (13) soutire de la source de tension (12) est maintenue constante durant le laps de temps (T) sur une période au moins égale à 0,75.Laps de temps.

**15.** Procédé pour faire fonctionner une tête de palpage (1) selon l'une des revendications 7 à 14, selon lequel les laps de temps (T) définis sont de même taille.

16. Procédé pour faire fonctionner une tête de palpage (1) selon l'une des revendications 7 à 15, selon lequel une période ($\tau$) dans laquelle l'impulsion de courant de sortie ($I_{14out}$) est délivrée à la charge (15) est au moins 10 fois plus petite que le laps de temps (T) pour délivrer la prochaine impulsion de courant de sortie ($I_{14out}$).

17. Procédé pour faire fonctionner une tête de palpage (1) selon l'une des revendications 7 à 16, selon lequel la charge (15) représente un étage d'émission, de sorte qu'un signal électromagnétique (A, B) est généré par l'étage d'émission.

FIG. 1

**FIG. 2a**

**FIG. 2b**

FIG. 3a

$I_{14out}$     $P_{14out}$

$\Delta T = T$

T

T

$\tau$

$t_0$   $t_1$   $t_2$    t

FIG. 3b

$U_{14}$

$U_{14max}$

T     T

$U_{14Set}$

$U_{14min}$

$t_0$   $t_1$   $t_2$    t

FIG. 3c

P

T

$P_{14in}$

$t_0$   $t_1$   $t_2$    t

FIG. 3d

$I_{14in}$

$I_{14in,max}$

T

$t_0$   $t_1$   $t_2$    t

FIG. 4a

$U$

$U_{13in}$

$U^*_{13in}$

$T$    $T$

$U_{13in, min}$

$t$

$t_0$    $t_1$    $t_2$

FIG. 4b

$\Delta T = T$

$P$

$T$

$P_{13in}, P^*_{13in}$

$t$

$t_0$    $t_1$    $t_2$

FIG. 4c

$I$

$T$

$I^*_{13in}$

$I_{13in}$

$t$

$t_0$    $t_1$    $t_2$

FIG. 5a

FIG. 5b

FIG. 5c

FIG. 5d

FIG. 6a

$U$

$U_{13in}$

$T$    $T$

$U_{13in, min}$

$t$

$t_0$  $t_1$  $t_2$

FIG. 6b

$\Delta T = T$

$P$

$T$

$P''_{13in,}$

$t$

$t_0$  $t_1$  $t_2$

FIG. 6c

$I$

$T$

$I''_{13in}$

$t$

$t_0$  $t_1$  $t_2$

## FIG. 7

```
I:      B ↗
```

```
II:      U₁₄
```

```
III:  C₁₄, U₁₄ₛₑₜ
```

```
V:      ΔT, η
```

$$\text{IV:} \quad \Delta E = \tfrac{1}{2}C \cdot [(U_{14set})^2 - (U_{14})^2]$$

$$\text{VI:} \quad P_{13in} = \Delta E / (\Delta T \cdot \eta)$$

```
VII:      U₁₃ᵢₙ
```

$$\text{VIII:} \quad I_{13in} = P_{13in} / U_{13in}$$

```
IX:      PWM
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1557639 B1